# EUROPEAN PATENT SPECIFICATION

(11) **EP 2 434 620 B1**
(45) Date of publication and mention of the grant of the patent: **28.08.2013**
(21) Application number: 11179485.5
(22) Date of filing: 31.08.2011
(51) Int. Cl.: H02K 3/52

(54) **Outer rotor-type motor**
Aussenläufermotor
Moteur à rotor extérieur

(30) Priority: 22.09.2010 JP 2010211493
(43) Date of publication of application: 28.03.2012
(73) Proprietor: Shinano Kenshi Kabushiki Kaisha, Nagano 386-0498 (JP)
(72) Inventor: Miyasaka, Takeshi, Nagano, 386-0498 (JP); Usui, Hiroaki, Nagano, 386-0498 (JP)
(74) Representative: Calderbank, Thomas Roger

(56) References cited:
- JP-A- 56 129 567
- US-A- 3 843 946
- US-A1- 2007 278 894

## Description

The present invention relates to an outer rotor-type motor, which is used in motor vehicles, industrial machines, office machines, etc.

In a motor, a direction of current passing through a coil of a stator unit is changed so as to rotate a rotor, which has a permanent magnet facing magnetic pole teeth of stator yokes. The coil is connected to a motor circuit board so as to control the direction of the current passing through the coil. For example, in an ordinary brushless motor, a magnet wire is wound, on a stator core, in a direction parallel to an output shaft (a direction of a core of the winding is perpendicular to an axial direction of the output shaft.). A beginning part and a termination part of the coil are extended in the axial direction and connected to a drive circuit.

In a stator unit of an inner rotor-type PM stepping motor, a magnet wire is wound on coil bobbins, which are provided around magnetic pole teeth of stator yokes, and an inner end and an outer end of a coil wire are extended to a space located outside of the stator, via terminals, etc. so as to connect the ends to a connector or a printed circuit board (see Japanese Laid-open Patent Publications No. 2002-78268 and No. 2005-110377).

In a stator of an outer rotor-type PM stepping motor, a magnet wire is wound on coil bobbins, which are provided inside of magnetic pole teeth of stator yokes, and guides for guiding coil leads are provided in gaps between inner parts of the coil bobbins and an outer part of a bearing housing. The coil leads are passed through the guides and connected to a connector or a printed circuit board (see Japanese Laid-open Patent Publication No. 2007-49844).
In comparison with the inner rotor-type PM stepping motor, the outer rotor-type PM stepping motor of the same size is capable of generating larger torque. However, in the outer rotor-type PM stepping motor, the coil leads must be provided to the inside of the motor, so they must be installed in a very narrow space. Therefore, efficiency of installing the coil leads must low, and it is difficult to secure reliability of insulation between the stator yokes and a coil.
To secure an enough space for installing the coil leads, a lamination factor of the coil or volumes of the stator yokes, which constitute a magnetic path, may be reduced. However, characteristics of the motor must be worse.
Namely, it is difficult to produce a large torque motor having a highly reliable insulating structure, so the outer rotor-type PM stepping motor has not been widely used.

US-A-2007/278894 discloses an outer rotor-type motor in which the stator is formed by a plurality of concentrically stacked units, and the rotor rotates about an output shaft and has a permanent magnet fixed thereto. The stator yokes have pawl-shaped poles (pole teeth) and sandwich the coil of the stator. The coil leads of the coil extend between the pawl-shaped poles.

JP-A-56-129567 also has pole teeth, but protruding from the outer circumference of the yoke plates of the stator.

Accordingly, it is desirable to provide an outer rotor-type motor so as to address at least one of the above described problems of the conventional technology. Namely, in the outer rotor-type motor of the present invention, coil leads can be efficiently installed in small spaces between stator units without reducing lamination factors of coils and lowering reliability of insulation between the stator yokes and coils.
According to the present invention there is provided an outer rotor-type motor, comprising:
an output shaft;
a stator being constituted by a plurality of stator units, which are concentrically stacked and in each of which a coil formed by winding a magnet wire is sandwiched by stator yokes having comb-shaped magnetic pole teeth;
a rotor being capable of rotating about the output shaft, the rotor having a permanent magnet whose magnetic poles face the magnetic pole teeth; and
a terminal section including terminals of a drive circuit for driving the motor, wherein
coil leads, which connect the coils to the terminal section, are installed, on an outer circumferential face of the stator, between the magnetic pole teeth of the stator units;
characterized in that:
a coil lead holding member*,* which has a coil lead holding section exposed between the magnetic pole teeth of the first stator yoke and the second stator yoke, is stacked, with the coil, in each of the stator units.

With this structure, the coil leads are installed, on the outer circumferential face of the stator, between the magnetic pole teeth of the stator units, so that the coil leads, which connect the coils to the terminal section, can be installed in small spaces without reducing lamination factors of the coils or reducing volumes of the stator yokes.

With this structure, the coil leads, which are extended from the coil of each of the stator units, are held by the coil lead holding member and installed between the magnetic pole teeth. Therefore, the coil leads can be installed easily, and projecting the coil leads toward the rotor can be prevented without reducing lamination factors of the coils and reducing volumes of the stator yokes.

Preferably, outer faces of the stator yokes are coated with insulating films, or outer faces of the coil leads are covered with insulating members or coated with insulating films.

With this structure, reliability of insulation between the coil leads and the magnetic pole teeth of the stator yokes can be improved.

Preferably, the coil leads connect the coils to the terminal section with joints, which are provided in gaps between the stator units.

With this structure, the coil leads can be efficiently installed between the magnetic pole teeth by determining positions of the joints in each of the stator units.

Preferably, the stator is entirely resin-molded.

With this structure, even if the motor is used in severe environments, e.g., vibration, temperature variation, the coil leads are not displaced and projected toward the rotor. Therefore, environment resistance and reliability of the motor can be improved.

In the outer rotor-type motor of the present invention, the coil leads can be efficiently installed in the small spaces between the stator units without reducing the lamination factors of the coils and reducing reliability of insulation between the coils and the terminal section.

Embodiments of the present invention will now be described by way of examples and with reference to the accompanying drawings, in which:
Fig. 1 is a perspective view of a stator unit;
Fig. 2 is an exploded perspective view of the stator unit shown in Fig. 1;
Fig. 3 is a plan view of a coil lead holding member;
Fig. 4 is a perspective view of a stator constituted by four stator units;
Fig. 5 is a perspective view of the stator shown in Fig. 4, which are entirely resin-molded;
Fig. 6 is a perspective view of the stator shown in Fig. 4, to which a connector is connected by resin molding;
Fig. 7 is a perspective view of another stator, to which a connector is connected by resin molding;
Fig. 8 includes explanation views, which show a connected structure of joints and coil leads;
Fig. 9A is an enlarged view of the joint;
Fig. 9B is an enlarged view of the coil lead;
Fig. 10A is a perspective view of another coil lead holding member; and
Fig. 10B is a perspective view of the stator including the coil lead holding member shown in Fig. 10A.

Preferred embodiments of the outer rotor-type motor of the present invention will now be described in detail with reference to the accompanying drawings. In the following description, the outer rotor-type motor is a claw pole-type two-phase stepping motor. A stator of the motor is constituted by a plurality of stator units, which are concentrically stacked and in each of which an air-core coil is sandwiched between stator yokes having comb-shaped magnetic pole teeth (claw poles).

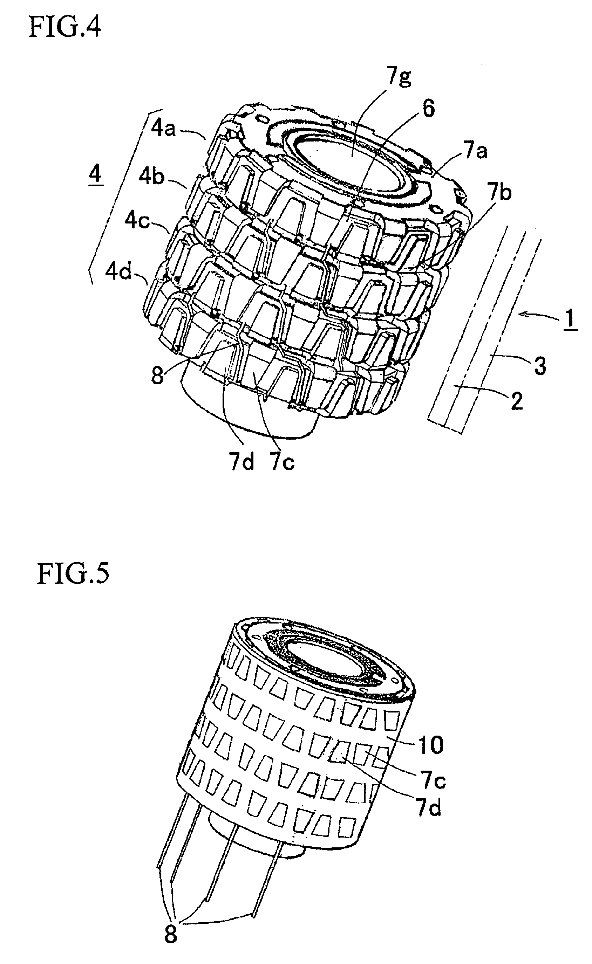

A schematic structure of the two-phase stepping motor will be explained with reference to Fig. 4. In Fig. 4, a rotor 1 includes: a cylindrical rotor yoke 3; and a permanent magnet 2, which is fixed to an inner circumferential face of the rotor yoke 3. In the permanent magnet 2, N-poles and S-poles are alternately formed in the circumferential direction. The permanent magnet 2 faces comb-shaped magnetic pole teeth (claw poles) of stator yokes to be described. The rotor 1 is integrated with an output shaft (not shown).

A stator 4 is constituted by stator units 4a, 4b, 4c and 4d, which are concentrically stacked and in each of which an air-core coil 6 of a magnet wire is sandwiched between a pair of stator yokes 7a and 7b. A cylindrical section 7g, through which the output shaft (not shown) is rotatably pierced, is formed in a center part of the stator yoke 7b. The coils 6 are attached concentrically with the cylindrical section 7g. Coil leads 8 of each of the coils 6 are installed, on an outer circumferential face of each of the stator units 4a, 4b, 4c and 4d, between the magnetic pole teeth (claw poles) 7c and 7d. Number n of the stator units for each phase is an integer of one or more. In the present embodiment, n=2, so the two stator units are provided for each phase (2×). Therefore, the four stator units 4a, 4b, 4c and 4d are concentrically stacked, and four or eight ends of the coil leads 8 are formed.

Next, a structure of each of the stator units will be explained. The stator units 4a, 4b, 4c and 4d have the same structure, so only the stator unit 4a will be explained.

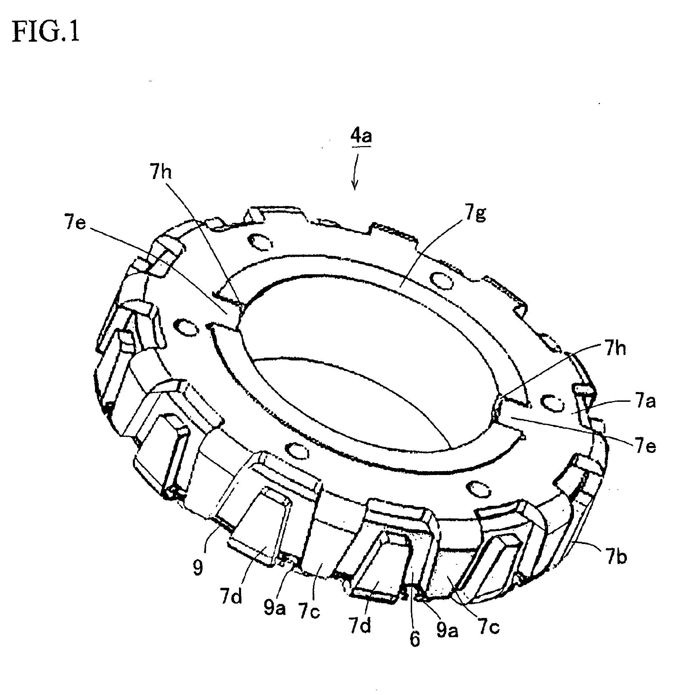

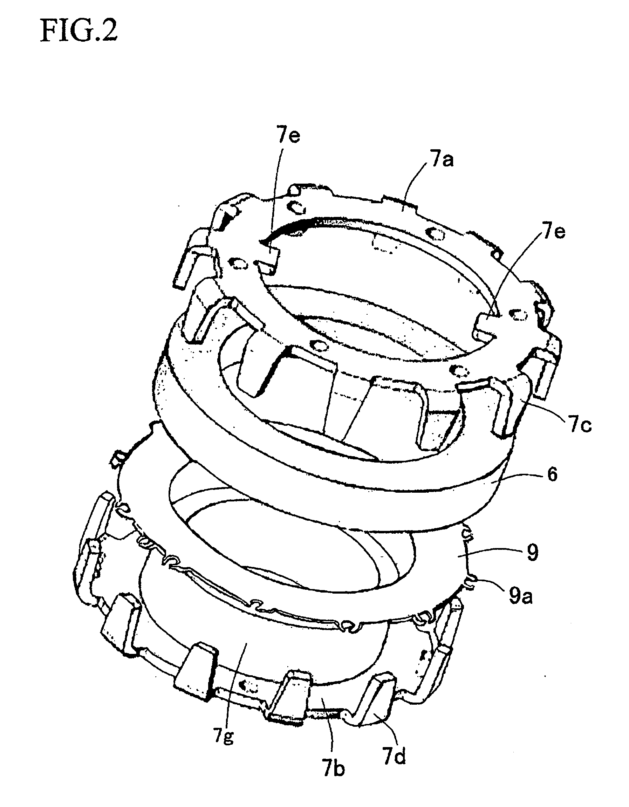

In Fig. 2, the coil 6 and a coil lead holding member 9 are stacked concentrically with the output shaft, and they are sandwiched between the first stator yoke 7a and the second stator yoke 7b. The comb-shaped magnetic pole teeth 7c of the first stator yoke 7a are shifted, in the circumferential direction, from the comb-shaped magnetic pole teeth 7d of the second stator yoke 7b with a prescribed phase difference. Outer faces of the first stator yoke 7a and the second stator yoke 7b are coated with insulating films. The insulating films may be formed by applying paint on the outer faces. In case that the first stator yoke 7a and the second stator yoke 7b are coated with no insulating films, the magnet wire is normally insulating-coated, further the coil leads 8 may be insulating-coated or covered with insulating members, e.g., plastic tubes, so as to secure insulation reliability. Coil lead holding sections 9a are formed in an outer circumferential face of the coil lead holding member 9. Each of the coil lead holding sections 9a is exposed between the magnetic pole teeth (claw poles) 7c and 7d of the stator yokes 7a and 7b (see Fig. 1). Each of the coil lead holding sections 9a is outwardly projected from the outer circumferential face of the coil lead holding member 9 and has a holding hole 9c. A part of the holding hole 9c is cut to form a notch 9b. The first stator yoke 7a has engage sections 7e, which are projected inward and capable of engaging with concave sections 7h of the cylindrical section 7g. By engaging the engage sections 7e with the concave sections 7h, the first stator yoke 7a can be correctly positioned with respect to the cylindrical section 7g.

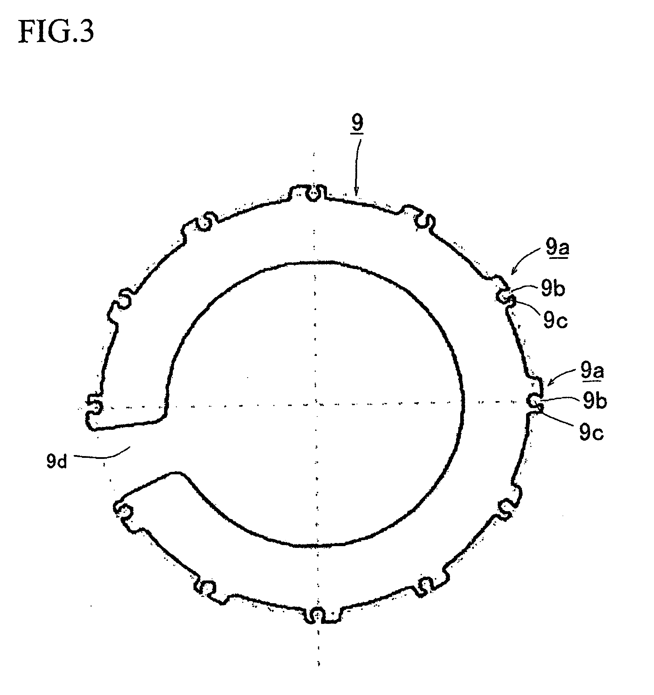

The coil lead holding member 9 is composed of an insulating material and formed into a C-shape with a gap 9d (see Fig. 3). Since the coil lead holding member 9 is formed into the C-shape, a gap 9d, which is formed from an outer edge to an inner edge of the coil lead holding member 9, is formed between the coil 6 and the stator yoke 7b. By setting the coil lead 8 in the gap 9d, the coil lead 8 can be extended from the inner side of the coil 6 to the outer side thereof without pressing the coil lead 8. Preferably, a thickness of the coil lead holding member 9 is greater than a maximum diameter of the magnet wire of the motor.

With the above described structure, the coil leads 8, which are extended between the stator units 4a, 4b, 4c and 4d, are held by the coil lead holding sections 9a, which are exposed between the comb-shaped magnetic pole teeth 7c and 7d of the stator yokes 7a and 7b, and passed through gaps between the geared magnetic pole teeth 7c and 7d. Therefore, the coil leads 8 can be easily installed and wired, interference with the magnetic pole teeth 7c and 7d can be prevented, and projecting the coil leads 8 toward the rotor 1 can be prevented.

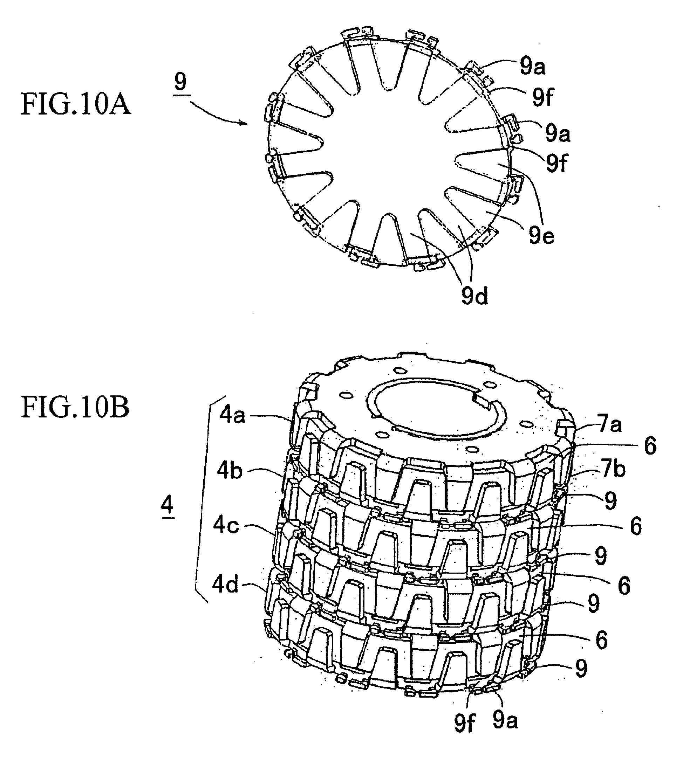

Note that, the shape of the coil lead holding member 9 is not limited to the C-shape. For example, the coil lead holding member 9 may be formed into a ring shape as shown in Fig. 10A. In Fig. 10A, spacers 9e are connected by bridge sections 9f to form into the ring shape, and radiated gaps 9d are formed between the spacers 9e. Coil lead holding sections 9a, each of which is constituted by a pair of claws, are outwardly projected from the bridge sections 9f. The bridge sections 9f are perpendicularly erected with respect to surfaces of the spacers 9e, and inner faces of the bridge sections 9f fit on an outer face of the second stator yoke 7b (gaps between the magnetic pole teeth 7d).

In each of the stator units 4a, 4b, 4c and 4d, the coil lead holding member 9 is sandwiched, together with the coil 6, between the first stator yoke 7a and the second stator yoke 7b as well as the example shown in Fig. 2 (see Fig. 10B). Note that, the coil leads 8 are omitted in Fig. 10B).

With the above described structure, the coil leads 8 can be outwardly extended, from optional positions on the inner side and the outer side of the coil 6 sandwiched between the first stator yoke 7a and the second stator yoke 7b, via the radiated gaps 9d. And then, the coil leads 8 are held by the coil lead holding sections 9a, which are projected outward from the bridge sections 9f, and installed between the magnetic pole teeth 7c and 7d.

In Fig. 4, the first stator yokes 7a and the second stator yokes 7b are coated with the insulating films. Further, outer faces of the coil leads 8 of the coils 6 may be covered with insulating members, e.g., plastic tubes, or insulating-coated with insulating paint, which is different from that normally used for coating the magnet wires. With this structure, reliability of insulation between the coil leads 8, which are extended from the coils 6, and the stator yokes 7a and 7b can be improved.

As shown in Fig. 5, the outer faces of the stator are molded with resin 10, but magnetic flux acting surfaces of the magnetic pole teeth 7c and 7d are exposed. With this structure, even if the motor is used in severe environments, e.g., vibration, temperature variation, the coil leads 8 are not displaced and projected toward the rotor 1. Therefore, environment resistance and reliability of the motor can be improved.

Note that, the magnetic flux acting surfaces of the magnetic pole teeth 7c and 7d of the stator units 4a, 4b, 4c and 4d need not be exposed. Exposing or covering the magnetic flux acting surfaces may be determined according to characteristics of products and use application thereof. If the magnetic flux acting surfaces of the magnetic pole teeth 7c and 7d are exposed, large torque can be easily obtained because gaps between the magnetic flux acting surfaces and the permanent magnet 2 are small. However, there is possibility that the resin 10 is peeled from the stator units 4a, 4b, 4c and 4d and form burrs. On the other hand, if the magnetic flux acting surfaces of the magnetic pole teeth 7c and 7d are coated, it is difficult to obtain large torque but peeling the resin 10 can be prevented.

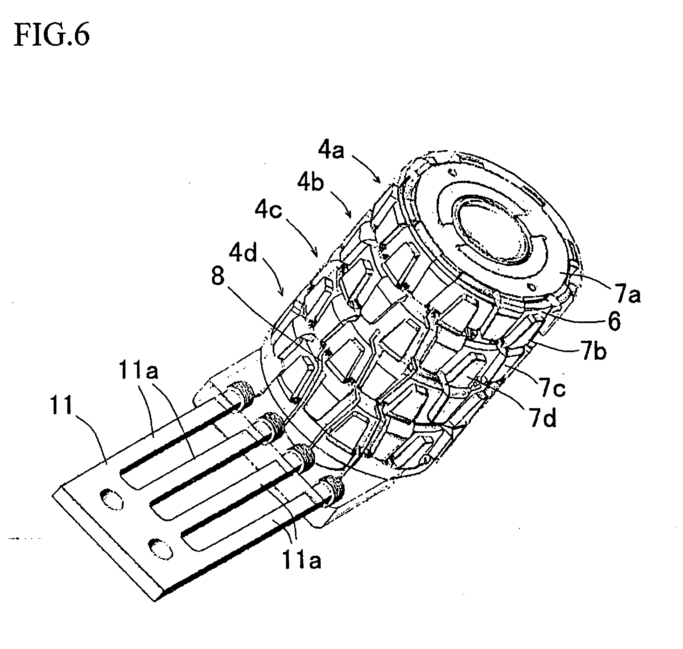

Next, steps of assembling the stator 4 will be explained. Firstly, as shown in Fig. 6, the coil 6 is fitted on the outer circumferential face of the cylindrical section 7g of each of the stator units 4a, 4b, 4c and 4d. In each of the stator units 4a, 4b, 4c and 4d, the coil 6 and the coil lead holding member 9 are sandwiched between the first stator yoke 7a and the second stator yoke 7b. In this step, the coil leads 8 located on the inner side and the outer side of the coil 6 can be held by the holding holes 9c of the coil lead holding sections 9a. Next, the stator units 4a, 4b, 4c and 4d are stacked. For example, the coil leads 8 are wired from the stator unit 4a to the stator unit 4d via gaps between the magnetic pole teeth 7c and 7d of each of the stator units 4a, 4b, 4c and 4d, and then the coil leads 8 are connected to connector terminals 11a of a connector 11 of a motor drive circuit. Then, the outer faces of the stator 4 and the connector terminals 11a may be resin-molded at a time. Note that, firstly the outer faces of the stator 4 may be resin-molded, and then the connector terminals 11a of the connector 11 may be resin-molded.

As described above, the coil leads 8 of the coils 6 are passed through the gaps between the geared magnetic pole teeth 7c and 7d and installed on the outer circumferential faces of the stator units 4a, 4b, 4c and 4d. Therefore, the coil leads 8 can be installed in small spaces without reducing lamination factors of the coils 6 and interfering with the rotor 1.

Since the coil leads 8 extended from the spaces between the stator units 4a, 4b, 4c and 4d are held by the coil lead holding sections 9a, which are exposed between the geared magnetic pole teeth 7c and 7d, and passed through the gaps between the geared magnetic pole teeth 7c and 7d, the coil leads 8 can be easily installed, interfering with the magnetic pole teeth 7c and 7d can be prevented and projecting toward the rotor 1 can be prevented.

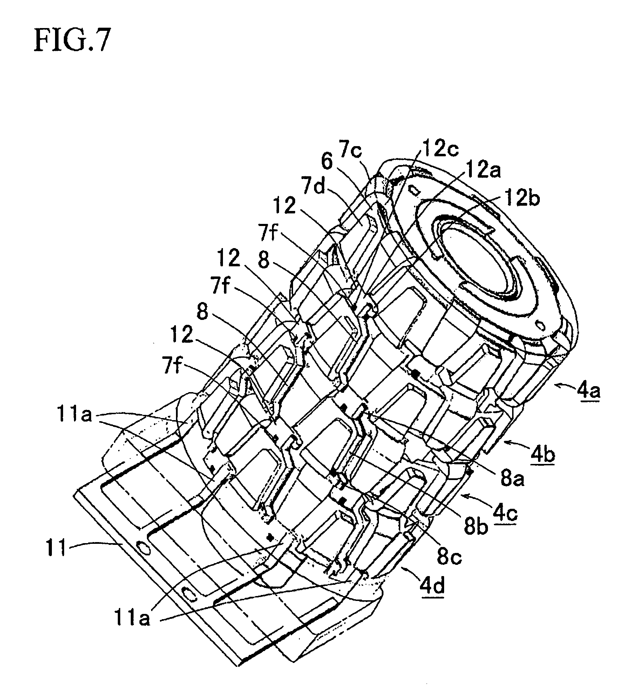

Successively, another embodiment having a different stator will be explained with reference to Figs. 7-9. Note that, the structural elements explained in the above described embodiment are assigned the same numeric symbols and explanation will be omitted. Unique points will be mainly explained.

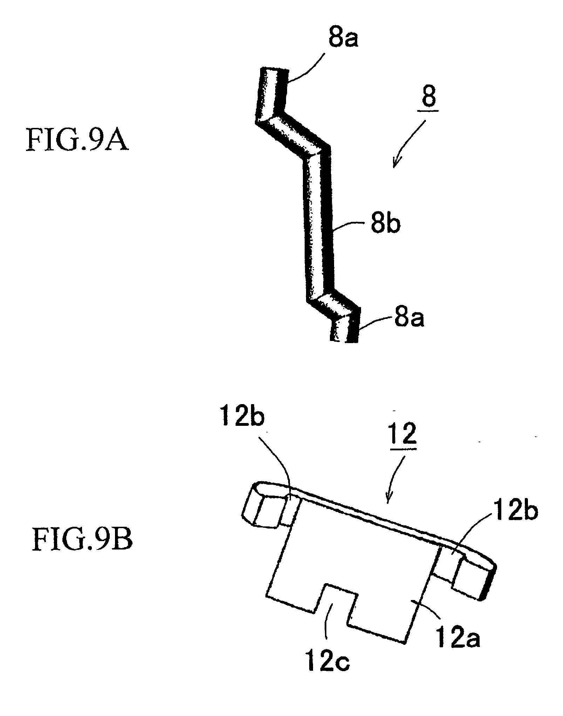

In Fig. 7, the coil leads 8, which electrically connect the stator units 4a, 4b, 4c and 4d to each other, are connected by the joints 12, which are provided in gaps between the stator units 4a, 4b, 4c and 4d. In each of the joints 12, engage sections 12b are formed on the both sides of a block section 12a as shown in Fig. 9B. Further, the block section 12a has a concave section 12c, which is capable of engaging with a projected section 7f of the first stator yoke 7a.

As shown in Fig. 9A, the coil lead 8 is constituted by engage sections 8a, which can be engaged with the engage sections 12b of the joints 12, and a bent section 8b, which is bent so as not to interfere with the magnetic pole teeth 7c and 7d. Note that, the coil leads 8 may be covered with, for example, insulating tubes, or coated with insulating paint.

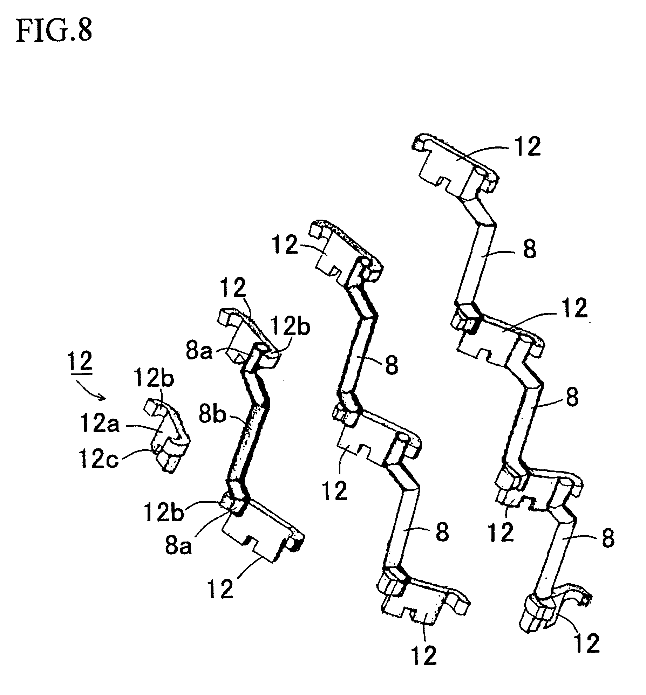

In Fig. 8, one of the engage sections 8a of the coil lead 8 is engaged with one of the engage sections 12b of the joint 12, and the other engage section 8a of the coil lead 8 is engaged with the other engage section 12b of the joint 12. Three coil leads 8 are serially connected, by the joints 12, in the above described manner.

As shown in Fig. 7, the joints 12 are fitted between the stator units 4a, 4b, 4c and 4d in a state where the concave sections 12c of the block sections 12a are engaged with the projected sections 7f. Further, the coil leads 8 are installed to pass the bent sections 8 through gaps between the magnetic pole teeth 7c and 7d. Therefore, the stator units 4a, 4b, 4c and 4d can be easily electrically connected to each other. Note that, the connector terminals 11a of the connector 11 are electrically connected to the engage sections 12b of the joints 12.

With above described structure, the joints 12 are assembled between the stator units 4a, 4b, 4c and 4d, so that the coil leads 8 can be efficiently installed between the magnetic pole teeth 7c and 7d. Note that, in the above described embodiment, the coil leads 8 are separated from the joints 12, but the coil leads 8 and the joints 12 may be originally integrated as one member.

Winding the coil 6 on the adjacent stator units, e.g., 4a and 4b, will be explained. In case that the coils 6 are in the same phase, a termination part of the coil 6 of one of the stator units is preferably previously connected to a beginning part of the coil 6 of the other stator unit. In case that winding directions of the coils 6 of the adjacent stator units are different, preferably the coil lead 8 corresponding to a termination part of the coil 6 of one of the stator units is extended outward from the gap 9d of the coil lead holding member 9 and wound the coil 6 on the other stator unit with the coil lead holding section 9a. By winding the magnet wire in the above described manners, assembling steps for treating wires can be reduced.

In the above described embodiments, the claw pole-type two-phase stepping motors have been described, but the present invention is not limited to the above described embodiments. The present invention may be applied to multi-phase (three-phase, four-phase, ....) stepping (brushless) motors, whose axial lengths must be long, but in which vibration can be reduced.

## Claims

1. An outer rotor-type motor,
comprising:
an output shaft;
a stator (4) being constituted by a plurality of stator units (4a, 4b, 4c, 4d), which are concentrically stacked and in each of which a coil (6) formed by winding a magnet wire is sandwiched by stator yokes (7a, 7b) having comb-shaped magnetic pole teeth (7c, 7d);
a rotor (1) being capable of rotating about the output shaft, the rotor (1) having a permanent magnet a coil lead holding member (9), which has whose magnetic poles face the magnetic pole teeth (7c, 7d); and
a terminal section (11) including terminals (11a) of a drive circuit for driving the motor, wherein
coil leads (8), which connect the coils (6) to the terminal section (11), are installed, on an outer circumferential face of the stator (4), between the magnetic pole teeth (7c, 7d) of the stator units (4a, 4b, 4c, 4d);
**characterized in that**:
a coil lead holding member (9), which has a coil lead holding section (9a) exposed between the magnetic pole teeth (7c, 7d) of the first stator yoke (7a) and the second stator yoke (7b), is stacked, with the coil (6), in each of the stator units (4a, 4b, 4c, 4d).

2. The outer rotor-type motor according to claim 1,
wherein outer faces of the stator yokes (7a, 7b) are coated with insulating films.

3. The outer rotor-type motor according to claim 1 or claim 2,
wherein outer faces of the coil leads (8) are covered with insulating members or coated with insulating films.

4. The outer rotor-type motor according to any one of claims 1 to 3,
wherein the coil leads (8) connect the coils (6) to the terminal section (11) with joints (12), which are provided in gaps between the stator units (4a, 4b, 4c, 4d).

5. The outer rotor-type motor according to any one of claims 1 to 4,
wherein the stator (4) is entirely resin-molded.

## Patentansprüche

1. Motor des Außenläufertyps, umfassend:
eine Abtriebswelle;
einen Stator (4), der sich aus einer Vielzahl von Statoreinheiten (4a, 4b, 4c, 4d) zusammensetzt, die konzentrisch gestapelt sind und in denen jeweils eine durch Winden eines Magnetdrahts gebildete Spule (6) von Statorbügeln (7a, 7b) mit kammförmigen Magnetpolzähnen (7c, 7d) umgeben ist;
einen Rotor (1), der in der Lage ist, um die Abtriebswelle zu rotieren, wobei der Rotor (1) einen permanenten Magneten (2) aufweist, dessen Magnetpole den Magnetpolzähnen (7c, 7c) zugewandt sind; und
einen Anschlussabschnitt (11), der Anschlüsse (11a) eine Treiberschaltung zum Antreiben des Motors aufweist; worin
Spulenleitungen (8), die die Spulen (6) mit dem Anschlussabschnitt (11) verbunden, auf einer Außenumfangsseite des Stators (4) zwischen den Magnetpolzähnen (7c, 7d) der Statoreinheiten (4a, 4b, 4c, d) eingerichtet werden;
**dadurch gekennzeichnet, dass**
ein Spulenleitungsträgerelement (9) mit einem Spulenleitungsträgerabschnitt (9a), der zwischen den Magnetpolzähnen (7c, 7d) des ersten Statorbügels (7a) und des zweiten Statorbügels (2) angeordnet ist, mit der Spule (6) in jeder der Statoreinheiten (4a, 4b, 4c, 4d) gestapelt ist.

2. Motor des Au βenläufertyps nach Anspruch 1,
worin Außenflächen der Statorbügel (7a, 7b) mit Isolierfilmen beschichtet sind.

3. Motor des Außenläufertyps nach Anspruch 1 oder Anspruch 2,
worin Außenflächen der Spulenleitungen (8) mit Isolierelementen bedeckt oder mit Isolierfilmen beschichtet sind.

4. Motor des Außenläufertyps nach einem der Ansprüche 1 bis 3,
worin die Spulenleitungen (8) die Spulen (6) über in Zwischenräumen zwischen den Statoreinheiten (4a, 4b, 4c, 4d) bereitgestellte Verbindungen (12) mit dem Anschlussabschnitt (11) verbinden.

5. Motor des Außenläufertyps nach einem der Ansprüche 1 bis 4, worin der Stator (4) vollständig harzgegossen ist.

## Revendications

1. Moteur à rotor extérieur,
comprenant :
un arbre de sortie ;
un stator (4) étant constitué d'une pluralité d'unités de stator (4a, 4b, 4c, 4d), qui sont empilées de manière concentrique et dans chacune desquelles une bobine (6) formée par enroulement d'un fil de bobinage est prise en sandwich par des culasses de stator (7a, 7b) ayant des dents de pôle magnétique en forme de peigne (7c, 7d) ;
un rotor (1) étant capable de tourner autour de l'arbre de sortie, le rotor (1) comprenant un aimant permanent (2) dont les pôles magnétiques font face aux dents de pôle magnétique (7c, 7d) ; et
une section à bornes (11) comprenant les bornes (11a) d'un circuit d'entraînement pour entraîner le moteur, dans lequel
les fils conducteurs de bobine (8) qui connectent les bobines (6) à la section à bornes (11), sont installés, sur une face circonférentielle extérieure du stator (4), entre les dents de pôle magnétique (7c, 7d) des unités de stator (4a, 4b, 4c, 4d) ;
**caractérisé en ce que** :
un élément de maintien de fil conducteur de bobine (9), qui comprend une section de maintien de fil conducteur de bobine (9a) exposée entre les dents de pôle magnétique (7c, 7d) de la première culasse de stator (7a) et de la seconde culasse de stator (7b), est empilé, avec la bobine (6), dans chacune des unités de stator (4a, 4b, 4c, 4d).

2. Moteur à rotor extérieur selon la revendication 1,
dans lequel les faces extérieures des culasses de stator (7a, 7b) sont revêtues de films isolants.

3. Moteur à rotor extérieur selon la revendication 1 ou la revendication 2,
dans lequel les faces extérieures des fils conducteurs de bobine (8) sont couvertes d'éléments isolants ou revêtues de films isolants.

4. Moteur à rotor extérieur selon l'une quelconque des revendications 1 à 3,
dans lequel les fils conducteurs de bobine (8) connectent les bobines (6) à la section à bornes (11) avec des joints (12), qui sont prévus dans les espaces entre les unités de stator (4a, 4b, 4c, 4d).

5. Moteur à rotor extérieur selon l'une quelconque des revendications 1 à 4,
dans lequel le stator (4) est entièrement moulé en résine.
